# EUROPÄISCHE PATENTSCHRIFT

(11) **EP 0 484 967 B1**
(45) Veröffentlichungstag und Bekanntmachung des Hinweises auf die Patenterteilung: **17.08.1994**
(21) Anmeldenummer: 91119067.6
(22) Anmeldetag: 08.11.1991
(51) Int. Cl.: F16B 31/04, F16B 35/00, E04B 1/26

(54) **Verbindungselement für zwei aneinanderliegende Werkstücke**
Fastening element for two work pieces, situated side by side
Elément de connexion pour deux pièces, l'une à côté de l'autre

(30) Priorität: 08.11.1990 DE 9015342 U
(43) Veröffentlichungstag der Anmeldung: 13.05.1992
(73) Patentinhaber: Güntert, Engelbert, D-79780 Stühlingen (DE)
(72) Erfinder: Güntert, Engelbert, D-79780 Stühlingen (DE)
(74) Vertreter: Weiss, Peter, Dr. rer. nat.

(56) Entgegenhaltungen:
- DE-A- 3 516 423
- DE-U- 9 015 342
- FR-A- 670 176
- GB-A- 1 099 472

## Beschreibung

Die Erfindung betrifft ein Verbindungselement für aneinanderliegende Balken, insbesondere für Holzbalken, mit einem diese durchsetzenden schaftartigen Organ sowie den Balken außenseitig anlegbaren Widerlagern.

Es ist bekannt, aneinanderliegende Holzbalken mit Langschaftschrauben zu verbinden, welche in miteinander fluchtende Bohrungen der Holzbalken eingesetzt und dann durch das Anziehen einer Mutter zwischen dieser und dem Schraubenkopf als Widerlager festgelegt werden. Derartige Verbindungselemente zu verbessern und einen neuartigen Spanndübel herzustellen, ist Aufgabe der Erfindung.

Zur Lösung dieser Aufgabe führt, daß das schaftartige Organ aus zwei koaxial angeordneten Bolzen und einem diese verbindenden Federelement besteht, das beidends mit den Bolzen fest verbunden ist, wobei wenigstens einer der Bolzen eine Sackbohrung mit Innengewinde zur Aufnahme einer Schraube od.dgl. aufweist, welche mit ihrem Kopf oder einer Mutter das Widerlager bildet.

Dabei hat es sich als günstig erwiesen, als Zwischenorgan eine Schraubenfeder einzusetzen, deren Enden mit dem Bolzen fest verbunden ist. Der Spanndübel wird beidends durch die Schrauben gehalten und ist ausreichend nachgiebig, um sich den Spannungen im Holz anzupassen, ohne dabei diesem gegenüber an Verbindungskraft einzubüßen.

Zwar sind etwa aus der DE-AN: K 5154 vom 08.01.1953 als Kleinbauelemente vorzugsweise einen Dämpfstoff aufweisende Spiralfedern bekannt, die auf beiden Seiten mit einem Einsatzstück, z.B. mit einem bolzenförmigen Körper, verlötet sind. Nach dem Löten erfolgt eine Abkühlung und im Anschluß daran eine geeignete Behandlung zur Erzeugung bzw. Wiedererzeugung der Federeigenschaften, wobei der Dämpfstoff aus einer Gummi- oder gummiartigen Umhüllung der Federwindung bestehen soll oder aus Gummi- oder gummiartigen Substanzen, die im Inneren des Federkörpers angeordnet sind.

Derartige Förderelemente sind für den Einsatz im Holzbau weder vorgesehen noch geeignet, weshalb sie dem Erfinder keine Anregung zur genannten Lösung seiner Aufgabe zu vermitteln in der Lage waren.

Nach einem weiteren Merkmal der Erfindung sollen zur Stabilitätsverbesserung Bolzen und Federelement von einer Hülse umgeben sein, die bevorzugt aus Metall besteht sowie ablängbar ausgebildet ist.

Ausgestaltungen der Erfindung sind den Unteransprüchen zu entnehmen.

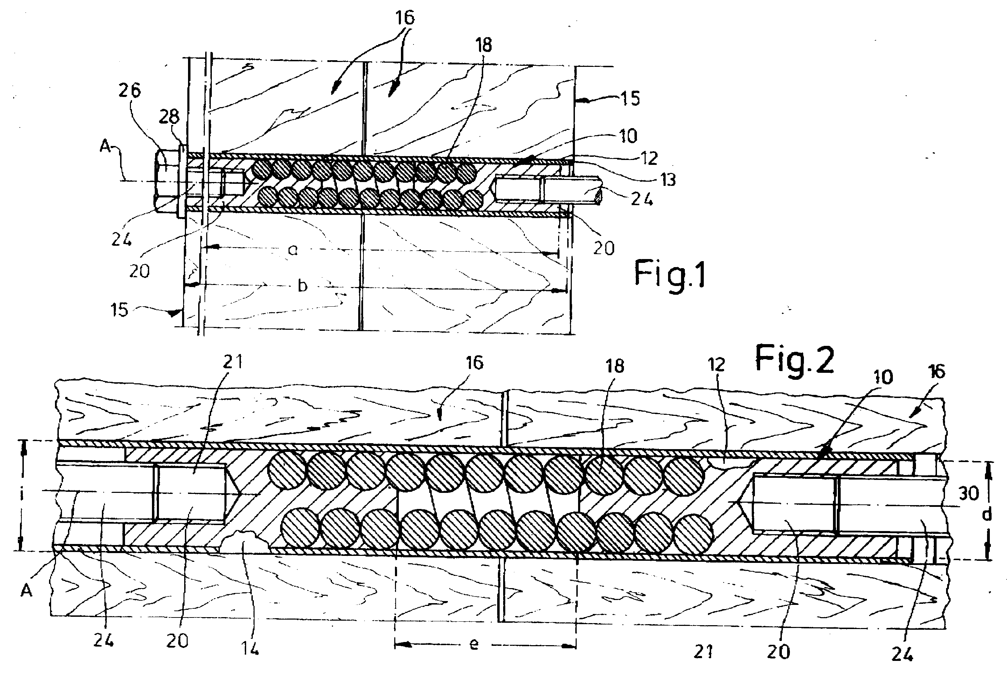

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1:: den Querschnitt durch zwei aneinanderliegende Holzbalken mit einem diese durchsetzenden Verbindungselement;
- Fig. 2:: den gegenüber Fig. 1 vergrößerten Schnitt durch ein Detail der Fig. 1.

Ein Spannstab 10 einer beispielsweisen Länge a von 200 mm durchsetzt mit einer ihn umgebenden Metallhülse 12 koaxiale Bohrungen 14 einander benachbarter Holzbalken 16 mit Spiel.

Dieser Spannstab 10 besteht i.w. aus einer Schraubenfeder 18, die beidends in -- durch sie in einem veränderlichen Abstand e verbundenen -- Bolzen 20 sitzt. Deren Durchmesser d von hier etwa 25 mm entspricht i.w. dem Innendurchmesser der Metallhülse 12, deren Außendurchmesser i von etwa 29 mm wiederum nur geringfügig kürzer ist als der Innendurchmesser der Bohrungen 14.

Die freien Enden der Bolzen 20 sind mit Sackbohrungen 21 ausgestattet, in deren Innengewinde 22 Spannschrauben 24 sitzen. Deren Köpfe 26 stützen sich über Unterlegscheiben 28 gegen die umgebenden Balkenoberflächen 15 bzw. gegen die Kanten 13 jener -- in gewünschter Länge b abgelängten -Metallhülse 12 ab.

Mit Hilfe dieser Spannschrauben 24 kann die Verspannung zwischen den Holzbalken 16 eingestellt und auch auf den Schrumpfungsprozeß des Holzes ausgerichtet werden. Die Metallhülse 12 verleiht der gesamten Spannvorrichtung eine ausreichende Stabilität um ihre Hauptachse A.

Mit 30 ist eine gegebenenfalls auf die Kante 13 der Metallhülse 12 aufgelegte führende Hülsenscheibe bezeichnet.

## Patentansprüche

1. Verbindungselement für aneinanderliegende Balken, insbesondere für Holzbalken, mit einem diese durchsetzenden schaftartigen Organ sowie den Balken außenseitig anlegbaren Widerlagern,
dadurch gekennzeichnet,
daß das schaftartige Organ aus zwei koaxial angeordneten Bolzen (20) und einem diese verbindenden Federelement (18) besteht, das beidends mit den Bolzen fest verbunden ist, wobei wenigstens einer der Bolzen eine Sackbohrung (21) mit Innengewinde (22) zur Aufnahme einer Schraube (24) od.dgl. aufweist, welche mit ihrem Kopf (26) oder einer Mutter das Widerlager bildet.

2. Verbindungselement nach Anspruch 1, dadurch gekennzeichnet, daß Bolzen (20) und Federelement (18) von einer Hülse (12) umgeben sind.

3. Verbindungselement nach Anspruch 2, dadurch gekennzeichnet, daß die Hülse (12) ablängbar ausgebildet ist.

4. Verbindungselement nach einem der Ansprüche 1 bis 3, dadurch gekennzeichnet, daß der Hülsenkante (13) wenigstens eine Hülsenscheibe (30) anliegt.

5. Verbindungselement nach Anspruch 4, dadurch gekennzeichnet, daß der Außendurchmesser der Hülsenscheibe (30) etwa jener der Hülse (12) ist.

## Claims

1. Connecting element for adjacent beams, in particular for wooden beams, with a shaft-like member which penetrates them as well as abutments which can be applied externally to the beam, characterised in that the shaft-like member consists of two coaxially arranged bolts (20) and a spring element (18) which connects them and is rigidly connected to the bolt at both ends, at least one of the bolts having a blind bore (21) with an internal thread (22) for receiving a screw (24) or the like which, with its head (26) or a nut, forms the abutment.

2. Connecting element according to claim 1, characterised in that bolt (20) and spring element (18) are surrounded by a sleeve (12).

3. Connecting element according to claim 2, characterised in that the sleeve (12) is designed to be cut into lengths.

4. Connecting element according to one of claims 1 to 3, characterised in that at least one sleeve disc (30) rests on the sleeve edge (13).

5. Connecting element according to claim 4, characterised in that the external diameter of the sleeve disc (30) is substantially that of the sleeve (12).

## Revendications

1. Elément de connexion pour des pièces juxtaposées, notamment des poutres en bois, avec un organe en forme de tige qui les traverse et des appuis appliqués sur la face extérieure des poutres,
élément caractérisé en ce que
l'organe en forme de tige se compose de deux goujons (20), coaxiaux, et d'un élément à ressort (18) qui les relie, cet élément étant solidarisé par ses deux extrémités aux goujons, au moins l'un des goujons ayant un trou borgne (21) avec un filetage intérieur (22) pour recevoir une vis (24) ou moyen analogue dont la tête (26) ou un écrou constitue l'appui.

2. Elément de connexion selon la revendication 1, caractérisé en ce que le goujon (20) et l'élément à ressort (18) sont entourés d'une douille (12).

3. Elément de connexion selon la revendication 2, caractérisé en ce que la douille (12) peut être mise à la longueur.

4. Elément de connexion selon l'une des revendications 1 à 3, caractérisé en ce que le bord (13) de la douille est appliqué contre au moins une rondelle à douille (30).

5. Elément de connexion selon la revendication 4, caractérisé en ce que le diamètre extérieur de la rondelle à douille (30) correspond sensiblement à celui de la douille (12).
